(19) Europäisches Patentamt
European Patent Office
Office européen des brevets

(11) EP 3 895 779 B1

(12) **EUROPEAN PATENT SPECIFICATION**

(45) Date of publication and mention
of the grant of the patent:
**11.03.2026 Bulletin 2026/11**

(21) Application number: **20169856.0**

(22) Date of filing: **16.04.2020**

(51) International Patent Classification (IPC):
**B01D 39/16** (2006.01)   **B01D 39/18** (2006.01)

(52) Cooperative Patent Classification (CPC):
**B01D 39/1623; B01D 39/163; B01D 39/18;**
B01D 2239/0622; B01D 2239/0627;
B01D 2239/0654; B01D 2239/0668;
B01D 2239/0681; B01D 2239/1216;
B01D 2239/1233; B01D 2239/1258

(54) **GLASS FIBER FREE FILTER MEDIUM WITH A DENSIFIED LAYER MADE OF SYNTHETIC FIBERS**

GLASFASERFREIES FILTERMEDIUM MIT EINER VERDICHTETEN, AUS KUNSTFASERN HERGESTELLTEN SCHICHT

MILIEU FILTRANT EXEMPT DE FIBRE DE VERRE DOTÉ D'UNE COUCHE DENSIFIÉE EN FIBRES SYNTHÉTIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**20.10.2021 Bulletin 2021/42**

(73) Proprietor: **Neenah Gessner GmbH**
**83052 Bruckmühl (DE)**

(72) Inventors:
• **NUTZ, Fabian**
**83607 Holzkirchen (DE)**
• **DEMMEL, Andreas**
**83620 Feldkirchen-Westerham (DE)**

(74) Representative: **Haseltine Lake Kempner LLP**
**One Portwall Square**
**Portwall Lane**
**Bristol BS1 6BH (GB)**

(56) References cited:
**US-A1- 2014 130 469**   **US-B1- 7 137 510**

• LORENTE-AYZA MARIA-MAGDALENA ET AL: "Comparison of porosity assessment techniques for low-cost ceramic membranes", BOLETIN DE LA SOCIEDAD ESPANOLA DE CERAMICA Y VIDRIO., vol. 56, no. 1, 1 January 2017 (2017-01-01), ES, pages 29 - 38, XP093051205, ISSN: 0366-3175, DOI: 10.1016/j.bsecv.2016.09.002

• ANONYMOUS: "Bubble point - Lenntech", 1 January 1997 (1997-01-01), XP093282011, Retrieved from the Internet <URL:https://www.lenntech.com/library/fine/bubble/bubble-point.htm>

**Description**

**Technical field of the invention**

The present invention relates to a multi-layered filter medium with a densified layer made of synthetic fibers, as well as to the use and the method for its production.

**Prior art**

Filter media are used in a variety of systems to remove undesirable materials (i.e. particles) from a liquid or gas by passing the liquid or gas through the filter medium.

In many areas of filtration, the demands on the purity of filtered liquids are increasing. This applies both to liquids used in industry, such as lubricating oils, hydraulic oils or fuels for internal combustion engines, and to liquids used in the food sector and for medical or pharmaceutical applications. For example, in the filtration of diesel fuels for internal combustion engines, the ISO 19438:2003 separation efficiency requirement for 4 $\mu$m large particles has constantly risen in the last 15 years. For this reason, great efforts have been made in the past to continuously increase the separation efficiency of the filter materials used, while at the same time maintaining the dust holding capacity and thus the service life of the filter at least unchanged.

Filter media containing glass fibers are a widely used filter material for fuel. These filter media achieve a very high removal efficiency for particles of $\geq$ 99.5%. However, the abrasive effect of the glass fibers, which can be washed out of the filter medium, can result in a damage of the equipment located after the filter, for example the fine injection nozzles of the fuel injection system.

Indeed, glass fibers may break into smaller pieces under mechanical stress during processing a filter media. These small glass particles also lie loose in the material of the filter medium and can be washed out from the media. Additionally, glass fibers which are loosely bond within the media could be washed out by fuel passing the media.

Due to the abrasive nature of glass fibers/particles, this so-called glass fiber shedding can damage the operating parts after the filter element. This is the reason why the usage of glass fibers within high efficiency fuel media always indicate a potential risk within the application.

In EP 1 133 342 B1 and US 7,137,510 B1 multi-layered filter media comprising a meltblown nonwoven as main filtration layer are disclosed, wherein this meltblown nonwoven is made of PP (polypropylene) or PES (polyether sulfone).

US 9,149,748 B2 (US 2014/130469 A1) discloses a filter medium comprising a first layer, a second layer and a third layer, wherein the second layer is positioned between the first and third layers and comprises a plurality of fibers formed by a melt-blown process, and wherein the air permeabilities and/or the mean flow pore sizes are higher for the first and third layers than for the second layer.

DE 10 2012 010 307 A1 discloses a multi-layered filter material comprising, in flow direction, a first layer comprising a wet or dry laid nonwoven, a second layer comprising a wet laid nonwoven made of cellulose or synthetic fibers or a mixture thereof, and a third layer comprising a calendared meltblown nonwoven. With this filter material, an efficiency according to ISO 19348 of 99.3% is achieved.

There remains a need to provide filter media free of glass fibers, which nevertheless provide a very high removal efficiency for a particle size $\geq$4 $\mu$m.

**Summary of the invention**

It is therefore an object of the present invention to provide a filter medium with a high separation efficiency (i.e. $\geq$99.3% at 4$\mu$m particles) without the use of glass fibers.

This object is solved by a filter medium according to the claims.

In the context of the present invention, the diameter of "many pores" is the diameter of an even distribution of pores in a layer. This feature can be determined according to the method defined below.

Preferably, the filter medium comprises a third layer. More preferably, the second layer is located between the first layer and the third layer.

The first layer can be any layer selected from the group consisting of wet-laid nonwovens, dry-laid nonwovens or synthetic grids. The dry-laid nonwovens may include for example spunlaid nonwovens, which can be produced according to any manufacturing methods.

Within the meaning of this invention, wet-laid nonwovens are all nonwovens that can be produced using wet-laying processes known to the skilled person for manufacturing filter media.

The wet-laid nonwoven for the first layer comprises natural fibers, synthetic fibers, or a mixture thereof. Examples of natural fibers are cellulose, cotton, wool, hemp, regenerated celluloses and fibrillated celluloses. Preferably, the first layer comprises at least 70% of natural fibers.

The average fiber diameter of natural fibers can be 10-50 $\mu$m, preferably 15-40 $\mu$m and even more preferably 20-35 $\mu$m.

Synthetic fibers comprise polyester fibers, polypropylene fibers, multicomponent fibers of which the individual components have different melting points, polyamide fibers and acrylic fibers.

Examples of polyester fibers are polybutylentherephthalate (PBT) fibers, polyethylentherephthalate (PET) fibers and polylactic acid (PLA) fibers. Examples of preferred multicomponent fibers are PET/CoPET bicomponent fibers having core-sheath configuration.

The average fiber diameter of the synthetic fibers is typically 3-30 $\mu$m, preferably 5-15 $\mu$m, and the cutting length is typically from 3-60 mm, preferably 4-12 mm.

The first layer can consist of 100% natural fibers or 100% of synthetic fibers. Preferably, the first layer consists of 100% natural fibers.

Suitable polymers to be used for the spunlaid nonwovens are, for example, polyester, such as polyethylene terephthalate, and polybutylene terephthalate, polyolefin, such as polypropylene, and polyurethane or mixture thereof. In many applications a spunlaid nonwoven comprising bicomponent fibers might be particularly advantageous. Example of preferred multicomponent fibers are PET/CoPET bicomponent fibers having core-sheath configuration. The typical average fiber diameter for spunlaid nonwoven is 5-30 $\mu$m, preferably 10-20 $\mu$m and even more preferably 12-17 $\mu$m.

For liquid application, such as fuel filtration, a first layer comprising at least 70% by weight of natural fibers based on the total weight of the fibers in the first layer may be particularly suitable.

When the first layer comprises at least 70% of natural fibers it is preferably saturated with a binder resin. Any known resin binder composition can be used.

The thickness of the first layer may be selected as desired. Preferably, the first layer may have a thickness of greater than or equal to 0.15 mm, more preferably greater than or equal to 0.20 mm, or most preferably greater than or equal to 0.40 mm. The first layer may have a thickness of less than or equal to 2.00 mm, more preferably less than or equal to 1.60 mm, or most preferably less than or equal to 1.20 mm. Combinations of the above-referenced ranges are also possible, preferably greater than or equal to 0.15 mm and less than or equal to about 1.00 mm. The thickness may be determined according to the standard ISO 534:2012-02 with a test plate pressure of 0.1 bar.

Preferably, the porosity of the first filter layer is 60-90% and more preferably 70-80%.

The first layer can also be a grid made of a thermoplastic polymer or a printed polymer pattern. The polymer of the printed polymer pattern is preferably a hot melt adhesive. The polymer of the printed polymer pattern or the base material of the hot melt adhesives, respectively, can be selected from the group consisting of: Ethylene-vinyl acetate (EVA) copolymers; Polyolefins (PO) such as polyethylene (usually low-density polyethylene (LDPE) but also high-density polyethylene (HDPE); HDPE has higher melting point and better temperature resistance), polypropylene (PP), atactic polypropylene (APP), polybutene-1, oxidized polyethylene, etc.); Polyamides (PA) and copolyamides (CoPA); Polyesters (PES), copolyester (CoPES) such as polyethylentherephthalate (PET), copolymer of PET (CoPET), polybuthylentherephthalate (PBT) and copolymer of PBT (CoPBT); Thermoplastic polyurethane (TPU); Styrene block copolymers (SBS); and mixtures thereof. When a printed polymer patter is chosen as a first layer, the polymer pattern is printed directly on the second layer. Advantages and methods of production of printed polymer patterns are described in patent application EP 19166533.

The second layer has many pores with a diameter of 4-13 $\mu$m, preferably 5-11 $\mu$m.

Preferably, the maximum pore size (diameter) of the second layer is 5-17 $\mu$m, preferably 6-16 $\mu$m.

When the second layer has many pores in the above range, a high initial efficiency can be achieved.

The second layer is any layer selected from the group consisting of spunbond nonwovens, meltblown nonwoven and a combination of a spunbond nonwoven and a meltblown nonwoven provided that the diameter of many pores for this second layer falls in the range given above.

Suitable polymers to be used for the second layer are, for example, polyester, such as polyethylene terephthalate, and polybutylene terephthalate, polyolefins, such as polypropylene, and polyurethane or a mixture thereof. In many applications the use of bicomponent fibers might be particularly advantageous. An example of preferred multicomponent fibers are PET/CoPET bicomponent fibers having core-sheath configuration.

The second layer is preferably a meltblown layer. Preferably, the meltblown layer comprises polyester fibers. The second layer can comprise a meltblown layer and a spunbond layer. In this case the meltblown layer and the spunbond layer, making up the second layer, will be densified together in order to obtain a second layer having a diameter of many pores as defined above.

The second layer is a densified layer. It is preferable that the second layer is a densified meltblown layer. The densification step guaranties the desired diameter of many pores as well as homogeneity of the layer, which in turn result in excellent performances.

The second layer can be produced according to any known method for producing spunbond or meltblown.

Preferably, the average fiber diameter (d1) of the fibers of the second layer (before calendaring/densifying) is 0.01 to 1.8 $\mu$m, more preferably, 0.25 to 1.8 $\mu$m, and most preferably 0.5 to 1.8 $\mu$m.

The fibers of the second layer before being densified by being calendered through a flat calander have an average diameter (d1) ≤1.8 μm, more preferably of 0.6 μm ≤d1 ≤1.8 μm, and particularly preferably of 0.60 μm ≤ d1 ≤1.75 μm, wherein at least 20% and preferably 30% of the fibers in this layer have a diameter (d) 0.6 μm ≤d ≤1 μm, and particularly preferably 0.60≤d≤0.95 μm. Preferably at least 25%, and particularly preferably at least 30% of the fibers have a diameter of 0.60≤d≤0.90 μm. The proportion of fibers with a diameter of 0.6≤d≤0.85 μm is at least 25% and preferably at least 30%.

In the present invention, a distinction is made between the "average fiber diameter" (d1) and the "diameter" (d). This difference is important because the average fiber diameter gives no information about the amount of fine fibers having a diameter (d) ≤1 μm.

When the second layer comprises a spunbond layer and a meltblown layer it is important that at least one layer has fiber diameters within the above ranges before calendaring (i.e. only the spunbond layer, or only the meltblown layer, or both). For example, when the meltblown layer has fiber diameters within the ranges indicated above, the additional spunbond layer of the second layer may have: a thickness of 0.09 to 0.8 mm; a basis weight of 10-40 g/m$^2$ and an air permeability of 30-3500 l/m$^2$s.

The second layer is densified, i.e. calendered with a flat calender. The thickness of the calendered second layer may be selected as desired. Preferably, the second layer may have a thickness of greater than or equal to 0.09 mm, more preferably greater than or equal to 0.10 mm, or most preferably greater than or equal to 0.15 mm. The second layer may have a thickness of less than or equal to 1.00 mm, more preferably less than or equal to 0.70 mm, or most preferably less than or equal to 0.50 mm. Combinations of the above-referenced ranges are also possible, preferably greater than or equal to 0.10 mm and less than or equal to about 0.50 mm. The thickness may be determined according to the standard ISO 534:2012-02 with a plate pressure of 0.1 bar.

The thickness of the total filter medium is preferably in the range of greater than or equal to 0.20 mm, more preferably in the range of greater than or equal to 0.30 mm, more preferably in the range of greater than or equal to 0.50 mm, and most preferably in the range of greater than or equal to 0.80 mm. The thickness of the total filter medium is preferably in the range of less than or equal to 2.00 mm, more preferably in the range of less than or equal to 1.5 mm, more preferably in the range of less than or equal to 1.20 mm, more preferably in the range of less than or equal to 1.00 mm. Combinations of the above-referenced ranges are also possible, for example preferably greater than or equal to 0.50 mm and less than or equal to about 1.00 mm. The thickness may be determined according to the standard ISO 534:2012-02 with a plate pressure of 0.1 bar.

The use of a meltblown nonwoven as the second layer of a filter medium is extremely advantageous, as the meltblown technique allows the commercial production of nonwovens comprising very fine fibers with very small diameters, as described above. The combination of a meltblown comprising such fine fibers and an additional densification of the nonwoven web yields an ISO19438:2003 filtration initial efficiency ≥99.3 %.

In order to achieve a high degree of separation by the overall arrangement even in the initial phase of the use of the filter medium, here as well a layer comprising cellulose can advantageously be used as the first layer (outflow side layer) . This material, even in the initial phase, exhibits a very high degree of separation for the particles to be filtered out, but with a storage capacity lower than that of meltblown nonwovens.

Advantageously, in a filter layer according to the invention, the functions of foldability, support of the other (synthetic) layers, and very fine filtration are integrated in the cellulose layer as the first layer. Preferably, the first layer is located on the outflow side.

Polyester fibers such as PBT fibers are preferably used for the second layer as they exhibit a good heat resistance and this make them highly suitable for processes involving calendering. Due to the good heat resistance the temperature conditions during calandering can be adjusted as required, such that a filter medium with the desired even distribution and homogeneity of pore sizes (i.e. many pores) can be obtained. Furthermore, the use of fibers with a good heat resistance avoids the problem that small fibers are melted completely during a calandering step, which would result in undesirable foil-like properties of the second layer.

Since the filter medium of the invention is free of glass fibers, a damage of the equipment located after the filter due to the abrasive effect of the glass fibers, which can be washed out of the filter medium, is avoided.

The filter medium may comprise a third layer which can be selected from the group consisting of a spunbond layer and a meltblown layer. Preferably the third layer is a meltblown layer. Preferably the third layer comprises polyester fibers, such as PBT, PET or PET/CoPET bicomponent fibers.

More preferably, the polyester fibers comprised in the second and the third layer are polybutylene terephthalate (PBT) fibers.

The average fiber diameter of the fibers, e.g. the polyester fibers, of the third layer is 0.01 to 10 μm, more preferably, 0.5 to 7 μm, and most preferably 1 to 5 μm.

The thickness of the third layer may be selected as desired. Preferably, the third layer may have a thickness of greater than or equal to 0.09 mm, more preferably greater than or equal to 0.10 mm, or most preferably greater than or equal to 0.15 mm. The third layer may have a thickness of less than or equal to 1.00 mm, more preferably less than or equal to 0.80 mm, or most preferably less than or equal to 0.50 mm. Combinations of the above-referenced ranges are also possible, for example preferably greater than or equal to 0.15 mm and less than or equal to about 0.50 mm. The thickness may be determined according to the standard ISO 534:2012-02 with a test plate pressure of 0.1 bar.

It is preferred that the second layer is a densified meltblown nonwoven, wherein the densification is obtained by calendaring with a flat calender. In the context of the present invention, a densified meltblown nonwoven is produced by calendaring using flat rolls such that the entire surface, i.e. all the fibers on the surface, of the meltblown nonwoven are partially melted to achieve the desired diameter of many pores. This calendaring step has to be distinguished from a calendaring step for joining two or more layers, wherein the calendar rolls have a specific design (or pattern), usually in the form of points, which protrudes over the surface of the rolls and through heat induces a melting of the polymer fibers only in the protruding areas of the rolls, so as to achieve binding. Such calendaring step for joining two or more layers does not significantly influence the diameter of many pores of the filter layer. In contrast, during a calendaring step using flat rolls to produce a densified meltblown nonwoven, the meltblown nonwoven is compressed so as to lead to specific pore sizes (i.e. diameter of many pores). In particular, the pore size distribution of the layer becomes homogenous. Preferably, the second layer consists exclusively of such a densified meltblown nonwoven. Preferably the second layer consists of a meltblown layer and a spunbond layer which are densified together. More preferably, the second layer consists of PBT (polybutylene terephthalate) fibers. Preferably, the second layer comprises at least 50% by weight, more preferably at least 60% by weight, more preferably at least 70% by weight, more preferably at least 80% by weight, more preferably at least 90% by weight and most preferably at least 95% by weight of PBT fibers, based on the total weight of fibers in the second layer. The second layer can be densified (i.e. calendered) between two 40°C-180°C hot calendar rolls with a linear pressure of 5 N/mm-450 N/mm. As a result, the separation efficiency of the filter material, which is in accordance with the invention, increases significantly.

The individual layers of the filter medium can be produced separately and combined afterwards; or each layer can be formed directly on the surface of the underlying layer; or these two methods can be combined. The combination of individual layers can be achieved by stacking and optionally by bonding the layers through for example gluing, sintering or calendaring. As explained above, if a calendaring step is performed in order to achieve binding of different layers, this will not involve the use of a flat calender.

Preferably, the first and the second layer are joined by gluing.

Preferably, the first and second layer, previously joined together, are joint to the third layer by gluing.

Preferably, the basis weight increases from the second layer to the first layer and optionally from the third layer to the first layer.

The basis weight of the first layer is preferably 100-350 $g/m^2$, more preferably 125-300 $g/m^2$, more preferably 175-250 $g/m^2$.

The basis weight of the second layer is preferably 10-200 $g/m^2$, more preferably 25-150 $g/m^2$, more preferably 50-100 $g/m^2$.

The basis weight of the third layer is preferably 10-175 $g/m^2$, more preferably 15-150 $g/m^2$, more preferably 20-90 $g/m^2$.

The basis weight of the total filter medium is preferably 150-700 $g/m^2$, more preferably 200-500 $g/m^2$, more preferably 250-450 $g/m^2$, and most preferably 300-400 $g/m^2$.

Preferably, the basis weight increases from the second layer to the first layer and optionally from the third layer to the first layer of the used filter medium.

Preferably, the air permeability increases from the first layer to the second layer and optionally from the second layer to the third layer.

Preferably, the air permeability decreases from the third layer to the first layer.

The first layer may have an air permeability lower than the air permeability of any other layers in the filter medium.

The first layer preferably may have an air permeability of greater than or equal to 1 $L/m^2sec$, greater than or equal to 2 $L/m^2sec$, or greater than or equal to 3 $L/m^2sec$.

Preferably, the first layer may have an air permeability of less than or equal to 20 $L/m^2sec$, less than or equal to 16 $L/m^2sec$, less than or equal to 12 $L/m^2sec$. Combinations of the above-referenced ranges are also possible. For example, the air permeability can be preferably greater than or equal to 1 $L/m^2sec$ and less than or equal to 20 $L/m^2sec$. The air permeability may be determined according to standard EN/ISO 9237 (1995) (where the measurement area is 20 $cm^2$ at a 2 mbar differential pressure).

Preferably, the second layer may have an air permeability of greater than or equal to 5 $L/m^2sec$, greater than or equal to 10 $L/m^2sec$, greater than or equal to 15 $L/m^2sec$. Preferably, the second layer may have an air permeability of less than or equal to 70 $L/m^2sec$, less than or equal to 60 $L/m^2sec$, less than or equal to 40 $L/m^2sec$. Combinations of the above-referenced ranges are also possible. For example, the air permeability can be preferably greater than or equal to 5 $L/m^2sec$ and less than or equal to 70 $L/m^2sec$, more preferably greater than or equal to 10 $L/m^2sec$ and less than or equal to 60 $L/m^2sec$, and most preferably greater than or equal to 15 $L/m^2sec$ and less than or equal to 40 $L/m^2sec$. The air permeability may be determined according to standard EN/ISO 9237 (1995) (where the measurement area is 20 $cm^2$ at a 2

mbar differential pressure).

Preferably, the third layer may have an air permeability of greater than or equal to 75 L/m$^2$sec, greater than or equal to 100 L/m$^2$sec, greater than or equal to 125 L/m$^2$sec. Preferably, the third layer may have an air permeability of less than or equal to 400 L/m$^2$sec, less than or equal to 300 L/m$^2$sec, less than or equal to 200 L/m$^2$sec. Combinations of the above-referenced ranges are also possible. For example, the air permeability can be preferably greater than or equal to 75 L/m$^2$sec and less than or equal to 250 L/m$^2$sec. The air permeability may be determined according to standard EN/ISO 9237(1995) (where the measurement area is 20 cm$^2$ at a 2mbar differential pressure).

The air permeability of the total filter medium is preferably in the range of 0.5 to 20 L/m$^2$s, more preferably 0.5 to 15 L/m$^2$s, and most preferably 1 to 10 L/m$^2$s.

Furthermore, the present invention relates to the use of a filter medium according to claims 1 to 7 for liquid filtration, wherein during the filtering the flow direction of the liquid is from the second layer to the first layer and optionally from the third layer to the first layer.

The initial efficiency for particles ≥ 4.0 µm according to ISO 19438:2003 of the second layer is at least 99.3 %, preferably 99.5% at particle size ≥ 4µm (see method described below).

The initial efficiency for particles ≥ 4.0 µm according to ISO 19438:2003 of the total filter medium is even more preferably at least 99.7%.

<u>Method for producing the filter medium</u>

The filter medium of the present invention is produced by a method according to claim 9. In an example, the filter medium can be prepared by a method according to claim 9 further comprising the following steps:

b) joining the second layer to the first layer by calendaring, or gluing and
c) optionally joining the third layer to the free surface of the second layer by calendaring or gluing.

When the first layer is a printed polymer pattern, the second layer is provided first and densified. Then the first layer is printed directly on the densified second layer. Subsequently, if a third layer is present, then this is glued on the other side of the second layer.

Filter

The filter medium of the present invention can be comprised in a filter element. Preferably, the filter element comprises at least one filter medium as described above and optional, additional layers.

The filter medium in the appending claims can be used in many applications. Filters made from the medium of the present invention are particularly suitable for liquid filtration such as fuel filtration (e.g. gasoline or diesel), oil filtration (such as lubricating oils and hydraulic oils) and water.

**Definitions**

Herein the term "filter element" refers to any device that can be used for the process of filtration, i.e. the mechanical or physical process used for the separation of one substance from another, such as solids, liquids, and gases, with the aid of an interposed filter medium.

Herein, the term "filter medium" refers to a material used in a filter in order to separate particles from their suspension in air or liquids.

Herein, the term "inflow side" refers to the side of the filter medium through which the material to be filtered enters the filter medium.

Herein, the term "outflow side" refers to the side of the filter medium through which the material to be filtered leaves the filter medium.

Herein, the term "flow direction" refers to the direction in which a material to be filtered flows through the filter medium, i.e. the flow direction is from the inflow side to the outflow side of the filter medium.

Herein, the term "layer" refers to a sheet of any material used in a filter medium.

Herein, the term "surface" refers to any interface between a layer of the filter medium and its surroundings or between the filter medium and its surroundings.

Herein, the term "liquid" refers to fuels, such as fuels for internal combustion engines, e.g. gasoline or diesel; oils, such as lubricating oils and hydraulic oils; or water.

Herein, the term "meltblown nonwoven" refers to all nonwovens that can be produced using meltblown processes known to the skilled person for manufacturing filter media, i.e. a process in which a molten polymer is extruded into a hot gas stream of high velocity such that the molten polymer is converted into fibers.

Herein, the term "cellulose" refers to any material made from plants that produce fibrous products based on polymers of the cellulose molecule as well as regenerated cellulose. Cotton plants produce separate cellulose fibers, whereas wood pulp is made by mechanically and/or chemically separating wood fibers. Other sources of cellulose are fibers such as flax manila, ramie and jute. Regenerated cellulose (rayon) is made by dissolving wood pulp in a solution and extruding that solution through spinnerets into a chemical bath that regenerates the fibers.

**Tests Methods**

Fiber diameters are measured as follows:

Device: scanning electron microscope (SEM) "Phenom Fei" with associated software Fibermetric V2.

Sampling: 5 different area of the filter medium will be analyzed over the web width.

Sample sputtering: Random recording of optical images, these areas are scanned with a 1000x magnification.

Fiber diameter determination via "one click" method, every fiber has to be recorded once; Measuring points that detect the crossing points of fibers and thus do not represent the fiber diameter are removed manually.

Average fiber diameter and percentage of fibers having a specific fiber diameter are evaluated using the data obtained from Fibermetric using Excel.

Thus, the average fiber diameter per sample is recorded at at least 5 points and these five mean values are combined into one mean value. This value is referred to as the mean fiber diameter of the sample.

At least 500 fibers are evaluated in total.

The percentage of fibers with a certain diameter is also recorded.

The layer thickness of the first, second and third layer as well as the thickness of the total filter medium is measured according to DIN EN ISO 534 2012-02 with a plate pressure of 0.1 bar.

The air permeability is measured according to DIN EN ISO 9237 (1995) at a pressure difference of 200 Pa and a sample size of 20 cm$^2$ using a Textest FX3300 instrument with a 20 cm$^2$ testing head.

The basis weight is measured according to DIN EN ISO 536 (2012-11).

Efficiency: The initial degree of separation and dust storage capacity are measured according to ISO 19438 (2003) on a flat sheet of 200 cm$^2$ (sample area), 100 mg/l upstream concentration and 0.71 l/min flowrate by using A3 medium Test Dust (ISO 12103-1, PTI Powder Technology Inc.). End of test at 0.7 bar differential pressure rise.

The maximum pore size and size of many pores is measured with reference to DIN ISO 4003:1990.

The pore size is measured with reference to DIN ISO 4003:1990. The sample is placed between an air-tight clamp over an orifice equipped with air supply and a connection to a pressure gauge (U-tube with mm indicator). Each sample is tested with the upper side facing upwards. Denatured ethanol (ethanol 100% with 1% MEK (Methyl-Ethyl-Ketone) as denaturant) is poured over the edge of the upper specimen holder (do not spray directly onto the sample / approx. 4 mm depth) to achieve a slight excess of air pressure on the liquid. The air pressure is slowly increased (approx. 5mm Water gauge/sec) until the first air bubble is visible. The necessary air pressure level is to be read from the pressure gauge (in mm water gauge) and, with the help of the surface tension of the ethanol (@23°C), the diameter of the largest pore ("maximum pore", "maximum pore size", "maximum pore diameter") can be calculated.

The air pressure is then increased further until air is passing through the sample over the entire surface (10cm$^2$) with an even distribution of bubbles but without foaming to determine the value for "many pores". The air pressure is read off again at this point and the relative pore diameter, i.e. the diameter of "many pores", "many pore size" "many pore diameter", "diameter of many pores" is calculated.

The "maximum pore diameter" and the diameter of "many pores" can be calculated as described above by using the following formula:

$$d = \frac{4\,\sigma \cdot \cos\alpha}{p} \cdot 1.000000$$

d = Pore diameter [$\mu$m]

p = Air pressure [mN/m$^2$)

$\sigma$ = Surface tension of the test liquid (e. g. ethanol) [Ethanol at 23°C $\sigma$ = 21.330225 mN/m]

$\alpha$ = Contact angle at the area where the liquid and the sample meet

(Conversion: 1mm water gauge = 98.07 mN/m$^2$)

The porosity is calculated from the actual density of the filter medium and the average density of the fibers used according to the following formula:

Porosity = (1 - density filter medium [g/cm$^3$]/ density fibers [g/cm$^3$]) ·100%

**Examples**

General Example 1

In Table 1 an exemplary embodiment of a three layer arrangement is disclosed. The first layer is a cellulose saturated base layer, followed by a densified meltblown layer, based on PBT (polybutylene terephthalate). The densification step was performed by means of a flat calander. The layer 3 is a meltblown layer based on PBT.

Table 1

| Layers | Layer 1 | Layer 2 | Layer 3 | Total medium |
|---|---|---|---|---|
| Type of nonwoven | Cellulose saturated base layer, wetlaid | Densified MB layer | Meltblown layer | |
| Polymer | Cellulose | PBT | PBT | |
| fiber diameter ($\mu$m) | 25 | 1 | 2-4 | |
| Thickness (mm) | 0.41 | 0.2 | 0.2 | 0.87 |
| Air permeability (l/m$^2$s) | 5 | 15-25 | 150 | 3-5 |
| Basis weight (g/m$^2$) | 211 | 80 | 55 | 370 |

Flow direction: Layer 3 (inflow side) - Layer 2 - Layer 1 (outflow side)

Example 2

In comparison to Example 1, the second layer comprises the densified meltblown layer of example 1 and an additional spunbond layer. The spunbond layer of the second layer comprises PBT fibers with a fiber diameter of 15 $\mu$m, a basis weight of 20 g/m$^2$ and a thickness of 0.09 mm. The meltblown layer and the spunbond layer of the second layer are densified together with a flat calender.
Flow direction: Third Layer (inflow side) - Second Layer - First Layer (outflow side)

Comparative Example 1 and 2

First Layer: Cellulose saturated base layer, wetlaid

Second Layer: Polyester meltblown fibers, densified by calendaring

Third Layer: Meltblown layer

Flow direction: Third Layer (inflow side) - Second Layer - First Layer (outflow side)

Table 2

| Sample | Air perm. (l/m$^2$s) | Max. Pore ($\mu$m) | Many Pores ($\mu$m) | Basis Weight (g/m$^2$) | Thickness mm) at 0,1bar | Average fiber diameter in the meltblown layer of the second layer ($\mu$m) | % of fibers with a diameter < 1 $\mu$m in the meltblow n layer of the second layer | Initial efficiency (%) for particles ≥4,0 $\mu$m [ISO 19438] |
|---|---|---|---|---|---|---|---|---|
| Example 1 (S4261) | 18,6 | 11 | 7,5 | 60 | 0,165 | 1,44 | 39,44 | 99,80 |
| Example 2 | 17, 9 | 11 | 7 | 80 | 0,180 | 1,40 | 38,99 | 99,78 |
| Comparative Example 1 | 75,4 | 18 | 14 | 59 | 0,163 | 1, 96 | 6,88 | 90,39 |
| Comparative Example 2 | 76,1 | 20 | 16 | 73 | 0,189 | 2,85 | 1,93 % | 81,75 |

Example 1, Example 2, Comparative Example 1 and Comparative Example 2 all comprise polyester meltblown fibers in the Second Layer.

As it can be seen in Table 2, the filter medium according to the present invention shows very good efficiency values though it does not contain glass fibers.

**Claims**

1. A filter medium comprising:

   a) a first layer,
   b) a second layer having many pores with a diameter of 4-13 $\mu$m, wherein the second layer is one selected from the group consisting of a spunbond layer, a meltblown layer and a combination of a spunbond layer and a meltblown layer, and wherein the second layer has been densified with a flat calender; and wherein the fibers of the second layer, before being densified, have an average diameter (d1) of ≤ 1.8 $\mu$m and wherein at least 20% of the fibers in the layer have a diameter (d) of 0.60 ≤ d ≤1 $\mu$m, and
   c) optionally a third layer;
   wherein when the second layer comprises a combination of a spunbond layer and a meltblown layer, at least one layer of the combination has fiber diameters (d1 and d) within the above ranges;
   wherein the many pores diameter is measured with reference to DIN ISO 4003:1990 and is calculated by using the formula

   $$d = \frac{4\,\sigma \cdot cos\,\alpha}{p} \cdot 1.000000$$

   d = Pore diameter [$\mu$m]
   p = Air pressure [mN/m$^2$]
   $\sigma$ = Surface tension of the test liquid (e. g. ethanol)
   [Ethanol at 23°C $\sigma$ = 21.330225 mN/m]
   $\alpha$ = Contact angle at the area where the liquid and the sample meet (Conversion: 1mm water gauge = 98.07 mN/m$^2$),
   wherein the air pressure is the air pressure at which air is passing through the sample over the entire surface (10 cm$^2$) with an even distribution of bubbles but without foaming;
   wherein the average fiber diameter (d1) and the fiber diameter (d) are measured by scanning electron microscope according to the method described in the description

2. The filter medium according to any one of claims 1, wherein the first layer comprises cellulose.

**3.** The filter medium according to any one of claims 1 to 2, wherein the filter medium comprises the third layer.

**4.** The filter medium according to any one of claims 1 to 3, wherein the second layer comprises polyester fibers.

**5.** The filter medium according to any one of claims 1 to 4, wherein the second layer comprises a densified meltblown layer.

**6.** The filter medium according to any one of claims 1 to 5, wherein the air permeability increases from the first layer to the second layer and optionally from the second layer to the third layer.

**7.** The filter medium according to any one of claims 1 to 6, wherein the basis weight increases from the second layer to the first layer and optionally from the third layer to the first layer.

**8.** Use of a filter medium according to any one of claims 1 to 7, wherein during the filtering the flow direction of the liquid is from the second layer to the first layer and optionally from the third layer to the first layer.

**9.** A method for producing the filter medium according to any one of claims 1 to 7 comprising the steps:

a) providing the first layer, the second layer and optionally the third layer; wherein the second layer is one selected from the group consisting of a spunbond layer, a meltblown layer and a combination of a spunbond layer and a meltblown layer; and wherein the fibers of the second layer, before being densified, have an average diameter (d1) of $\leq 1.8$ μm and wherein at least 20% of the fibers in the layer have a diameter (d) of $0.60 \leq d \leq 0.95$ μm; wherein when the second layer comprises a combination of a spunbond layer and a meltblown layer, at least one layer of the combination has fiber diameters (d1 and d) within the above ranges,
b) densifying the second layer with a flat calender,
c) joining the first, second and optionally the third layer.

**Patentansprüche**

**1.** Filtermedium, umfassend:

a) eine erste Schicht,
b) eine zweite Schicht, die viele Poren mit einem Durchmesser von 4-13 μm aufweist, wobei die zweite Schicht ausgewählt ist aus der Gruppe bestehend aus einer Spinnvliesschicht, einer Schmelzblasschicht und einer Kombination aus einer Spinnvliesschicht und einer Schmelzblasschicht, und wobei die zweite Schicht mit einem Flachkalander verdichtet wurde; und wobei die Fasern der zweiten Schicht, bevor sie verdichtet wurden, einen durchschnittlichen Durchmesser (d1) von $\leq 1,8$ μm aufweisen und wobei mindestens 20 % der Fasern in der Schicht einen Durchmesser (d) von $0,60 \leq d \leq 1$ μm aufweisen, und
c) optional eine dritte Schicht;
wobei, wenn die zweite Schicht eine Kombination aus einer Spinnvliesschicht und einer Schmelzblasschicht umfasst, mindestens eine Schicht der Kombination Faserdurchmesser (d1 und d)innerhalb der oben genannten Bereiche aufweist;
wobei der Durchmesser der vielen Poren unter Bezugnahme auf DIN ISO 4003:1990 gemessen wird
und unter Verwendung der folgenden Formel berechnet wird

$$d = \frac{4\,\sigma \cdot cos\,\alpha}{p} \cdot 1.000000$$

d = Porendurchmesser [μm]
p = Luftdruck [mN/m²]
σ = Oberflächenspannung der Testflüssigkeit (z. B. Ethanol) [Ethanol bei 23 °C σ = 21,330225 mN/m]
α = Kontaktwinkel an der Stelle, an der die Flüssigkeit und die Probe aufeinandertreffen (Umwandlung: 1 mm Wassersäule = 98,07 mN/m²),
wobei der Luftdruck der Luftdruck ist, bei dem Luft auf der gesamten Oberfläche (10 cm²) mit gleichmäßiger Blasenverteilung, aber ohne Schaumbildung durch die Probe strömt;
wobei der durchschnittliche Faserdurchmesser (d1) und der Faserdurchmesser (d) durch ein Rasterelektronenmikroskop gemäß dem in der Beschreibung beschriebenen Verfahren gemessen werden.

**2.** Filtermedium nach Anspruch 1, wobei die erste Schicht Zellulose umfasst.

**3.** Filtermedium nach einem der Ansprüche 1 bis 2, wobei das Filtermedium die dritte Schicht umfasst.

**4.** Filtermedium nach einem der Ansprüche 1 bis 3, wobei die zweite Schicht Polyesterfasern umfasst.

**5.** Filtermedium nach einem der Ansprüche 1 bis 4, wobei die zweite Schicht eine verdichtete Schmelzblasschicht umfasst.

**6.** Filtermedium nach einem der Ansprüche 1 bis 5, wobei die Luftdurchlässigkeit von der ersten Schicht zu der zweiten Schicht und optional von der zweiten Schicht zu der dritten Schicht zunimmt.

**7.** Filtermedium nach einem der Ansprüche 1 bis 6, wobei das Flächengewicht von der zweiten Schicht zu der ersten Schicht und optional von der dritten Schicht zu der ersten Schicht zunimmt.

**8.** Verwendung eines Filtermediums nach einem der Ansprüche 1 bis 7, wobei während des Filterns die Fließrichtung der Flüssigkeit von der zweiten Schicht zu der ersten Schicht und optional von der dritten Schicht zu der ersten Schicht ist.

**9.** Verfahren zum Herstellen des Filtermediums nach einem der Ansprüche 1 bis 7, umfassend die folgenden Schritte:

a) Bereitstellen der ersten Schicht, der zweiten Schicht und optional der dritten Schicht; wobei die zweite Schicht ausgewählt ist aus der Gruppe bestehend aus einer Spinnvliesschicht, einer Schmelzblasschicht und einer Kombination aus einer Spinnvliesschicht und einer Schmelzblasschicht; und wobei die Fasern der zweiten Schicht, bevor sie verdichtet wurden, einen durchschnittlichen Durchmesser (d1) von $\leq$ 1,8 $\mu$m aufweisen und wobei mindestens 20 % der Fasern in der Schicht einen Durchmesser (d) von 0,60 $\leq$ d $\leq$ 0,95 $\mu$m aufweisen; wobei, wenn die zweite Schicht eine Kombination aus einer Spinnvliesschicht und einer Schmelzblasschicht umfasst, mindestens eine Schicht der Kombination Faserdurchmesser (d1 und d) innerhalb der oben genannten Bereiche aufweist,
b) Verdichten der zweiten Schicht mit einem Flachkalander,
c) Verbinden der ersten, zweiten und optional der dritten Schicht.

**Revendications**

**1.** Milieu filtrant comprenant :

a) une première couche,
b) une deuxième couche présentant de nombreux pores d'un diamètre de 4 à 13 $\mu$m, la deuxième couche étant choisie dans le groupe se composant d'une couche filée-liée, d'une couche de fusion-soufflage et d'une combinaison d'une couche filée-liée et d'une couche de fusion-soufflage, et la deuxième couche ayant été densifiée à l'aide d'une calandre plate ; et les fibres de la deuxième couche, avant la densification, présentant un diamètre moyen (d1) $\leq$ 1,8 $\mu$m et au moins 20 % des fibres de la couche présentant un diamètre (d) de 0,60 $\leq$ d $\leq$ 1 $\mu$m, et
c) éventuellement une troisième couche ;
dans lequel, lorsque la deuxième couche comprend une combinaison d'une couche filée-liée et d'une couche de fusion-soufflage, au moins une couche de la combinaison présente des diamètres de fibres (d1 et
d) dans les plages ci-dessus ;
dans lequel le diamètre des nombreux pores est mesuré par rapport à la norme DIN ISO 4003:1990
et est calculé à l'aide de la formule

$$d = \frac{4\,\sigma \cdot \cos\alpha}{p} \cdot 1.000000$$

d = Diamètre des pores [$\mu$m]

p = Pression de l'air [mN/m$^2$]

σ = Tension superficielle du liquide d'essai (par exemple, l'éthanol)

[Éthanol à 23 °C σ = 21,330225 mN/m]

α = Angle de contact à la zone où le liquide et l'échantillon se rencontrent (Conversion : 1 mm de jauge d'eau = 98,07 mN/m$^2$), dans lequel la pression de l'air est la pression de l'air à laquelle l'air passe à travers l'échantillon sur toute la surface (10 cm$^2$) avec une distribution uniforme de bulles mais sans mousser ;

dans lequel le diamètre moyen des fibres (d1) et le diamètre des fibres (d) sont mesurés par un microscope électronique à balayage selon le procédé décrit dans la description

2. Milieu filtrant selon l'une quelconque des revendications 1, dans lequel la première couche comprend de la cellulose.

3. Milieu filtrant selon l'une quelconque des revendications 1 à 2, dans lequel le milieu filtrant comprend la troisième couche.

4. Milieu filtrant selon l'une quelconque des revendications 1 à 3, dans lequel la deuxième couche comprend des fibres de polyester.

5. Milieu filtrant selon l'une quelconque des revendications 1 à 4, dans lequel la deuxième couche comprend une couche de fusion-soufflage densifiée.

6. Milieu filtrant selon l'une quelconque des revendications 1 à 5, dans lequel la perméabilité à l'air augmente de la première couche à la deuxième couche et éventuellement de la deuxième couche à la troisième couche.

7. Milieu filtrant selon l'une quelconque des revendications 1 à 6, dans lequel le poids de base augmente de la deuxième couche à la première couche et éventuellement de la troisième couche à la première couche.

8. Milieu filtrant selon l'une quelconque des revendications 1 à 7, dans lequel durant le filtrage la direction d'écoulement du liquide est de la deuxième couche à la première couche et éventuellement de la troisième couche à la première couche.

9. Procédé de fabrication du milieu filtrant selon l'une quelconque des revendications 1 à 7, comprenant les étapes :

a) de fourniture de la première couche, de la deuxième couche et éventuellement de la troisième couche ; la deuxième couche étant choisie dans le groupe se composant d'une couche filée-liée, d'une couche de fusion-soufflage et d'une combinaison d'une couche filée-liée et d'une couche de fusion-soufflage ; et les fibres de la deuxième couche, avant la densification, présentant un diamètre moyen (d1) ≤ 1,8 μm et au moins 20 % des fibres de la couche présentant un diamètre (d) de 0,60 ≤ d ≤ 0,95 μm ; lorsque la deuxième couche comprend une combinaison d'une couche filée-liée et d'une couche de fusion-soufflage, au moins une couche de la combinaison présentant des diamètres de fibres (d1 et d) dans les plages ci-dessus,

b) de densification de la deuxième couche avec une calandre plate,

c) de l'assemblage de la première, la deuxième et éventuellement la troisième couche.

## EP 3 895 779 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1133342 B1
- US 7137510 B1
- US 9149748 B2
- US 2014130469 A1
- DE 102012010307 A1
- EP 19166533 A